# EUROPEAN PATENT APPLICATION

(11) **EP 4 737 656 A1**
(43) Date of publication of application: **06.05.2026**
(21) Application number: 25188960.6
(22) Date of filing: 11.07.2025
(51) Int. Cl.: E03C 1/04, E03C 1/05

(54) **CONTROL MODULE FOR WATER OUTLET DEVICE, WATERWAY SWITCHING DEVICE, WATER OUTLET DEVICE AND SHOWER**

(30) Priority: 31.10.2024 CN 202411544074
(71) Applicant: Fujian Domoo Sanitary Ware Technology Co., Ltd, QuanZhou, Fujian 362304 (CN)
(72) Inventor: LIN, Xiaofa, QuanZhou, 362304 (CN); LIN, Xiaoshan, QuanZhou, 362304 (CN); ZENG, Zhaokuan, QuanZhou, 362304 (CN); LIU, Jiaxin, QuanZhou, 362304 (CN); CHEN, Zhiwei, QuanZhou, 362304 (CN); LIANG, Pansheng, QuanZhou, 362304 (CN); DENG, Xiaoqing, QuanZhou, 362304 (CN); LIU, Qiqiao, QuanZhou, 362304 (CN)
(74) Representative: Kaya, Erdem

(57) **Abstract**

A water outlet device includes a switching valve (2), a control module (10) and a hydroelectric generator (7). The switching valve includes a valve body (21), a valve stem (25) and at least two solenoid valves (27,28). The valve stem (25) is configured to control the opening and closing of a first water outlet port (101), and each solenoid valve (27, 28) is configured to control the opening and closing of a second water outlet port (102) respectively. When the second water outlet ports (102) are all closed, the valve stem (25) moves to a position where the first water outlet port (101) is opened, and when at least one second water outlet port (102) is opened, the valve stem (25) moves to a position where the first water outlet port (101) is closed. The control module (10) is configured to: receive an operation information of a user, the operation information being configured for controlling opening and closing of one of the at least two solenoid valves (27, 28); and control one solenoid valve corresponding to the operation information to open, in response to the operation information, so as to open the second water outlet port corresponding to the solenoid valve.

## Description

### TECHNICAL FIELD

The present application relates to the technical field of sanitary ware, and in particular to a control module for a water outlet device, a waterway switching device, a water outlet device and a shower.

### BACKGROUND

The existing multi-functional water outlet devices, such as a shower and a top sprayer, are usually provided with a plurality of water outlet modes, and the existing water outlet modes are switched by means of mechanical structure toggle or electronic control. The mechanical structure switching method requires a specific structure, and the design of the appearance of the shower and top sprayer or the user's operating experience will be limited by the mechanical structure, which is not suitable for the needs of bathroom spaces with more diverse design styles. If the electronic control switching method is adopted, due to the usage scenarios of the shower and the top sprayer, direct charging is impossible, and generally self-generation is required to operate the solenoid valve that controls and switches the water outlet mode. Through electronic control, when the shower or top sprayer is just supplied with water and starts working, the water pressure is not enough, resulting in limited power that can be provided. Generally, it can only satisfy the operation of one solenoid valve. When more than one solenoid valve is provided, it will not be able to switch the water outlet style in response to user's operation due to insufficient power. In order to ensure the user experience, the water outlet mode of the shower or top sprayer controlled by the solenoid valve is limited.

### SUMMARY

Embodiments of the present application provide a control module for a water outlet device, a waterway switching device, a water outlet device, and a shower, so as to solve the problem that the water outlet mode is limited due to unstable power generation at the beginning when the opening and closing of a solenoid valve is electrically controlled to switch the water outlet mode in the prior art.

An embodiment of the present application provides a control module for a water outlet device including a switching valve, a control module, and a hydroelectric generator. The hydroelectric generator is configured for supplying power to the control module and the switching valve, the switching valve includes a valve body, a valve stem, and at least two solenoid valves, and the valve body has a water inlet port, a first water outlet port, and at least two second water outlet ports. The valve stem is configured for controlling opening and closing of the first water outlet port, and each solenoid valve is configured for respectively controlling opening and closing of one of the second water outlet ports. The valve body is provided with a water inlet cavity communicated with the water inlet port, and the valve stem is configured to be movably positioned in the water inlet cavity. When the second water outlet ports are all in a closed state, the valve stem is capable of moving to a position where the first water outlet port is opened under an action of a water inlet pressure of the water inlet cavity. When at least one of the second water outlet ports is opened, the valve stem is capable of moving to a position where the first water outlet port is closed under the action of the water inlet pressure of the water inlet cavity.

The control module is configured to: receive an operation information of a user; the operation information being configured for controlling opening and closing of one of the at least two solenoid valves; and control one solenoid valve corresponding to the operation information to open, in response to the operation information, so as to open a second water outlet port corresponding to the solenoid valve.

In one embodiment, the at least two solenoid valves include a first solenoid valve and a second solenoid valve. The control module is further configured to: control the first solenoid valve to open and keep the second solenoid valve closed in response to a first operation information of the user; control the second solenoid valve to open and keep the first solenoid valve closed in response to a second operation information of the user; and/or control the first solenoid valve or the second solenoid valve to close, in response to a third operation information of the user when the first solenoid valve or the second solenoid valve is opened, so as to open the first water outlet port.

In one embodiment, the control module is further configured to: control both the first solenoid valve and the second solenoid valve to open, in response to a fourth operation information of the user, after a predetermined time during which the control module receives power from the hydroelectric generator; the fourth operation information being configured to control opening of the first solenoid valve and the second solenoid valve; and/or keep an open state of the first solenoid valve or the second solenoid valve or a closed state of the first solenoid valve and the second solenoid valve, in response to a fourth operation information of the user, within a predetermined time during which the control module receives power from the hydroelectric generator; the fourth operation information being configured to control opening of the first solenoid valve and the second solenoid valve.

In one embodiment, the at least two solenoid valves include a first solenoid valve and a second solenoid valve. The control module is further configured to: keep an open state of the second solenoid valve after controlling the first solenoid valve to open in response to a first operation information of the user, when the second solenoid valve is in the open state after a predetermined time during which the control module receives power from the hydroelectric generator; and keep an open state of the first solenoid valve after controlling the second solenoid valve to open in response to a second operation information of the user, when the first solenoid valve is in the open state.

An embodiment of the present application also provides a waterway switching device, including a switching valve and the control module as described above.

The switching valve includes a valve body, a valve stem, and at least two solenoid valves, the valve body has a water inlet port, a first water outlet port, and at least two second water outlet ports, the valve stem is configured for controlling opening and closing of the first water outlet port, and each solenoid valve is configured for respectively controlling opening and closing of one of the second water outlet ports. The valve body is provided with a water inlet cavity communicated with the water inlet port, and the valve stem is configured to be movably positioned in the water inlet cavity. When the second water outlet ports are all in a closed state, the valve stem is capable of moving to a position where the first water outlet port is opened under an action of a water inlet pressure of the water inlet cavity. When at least one of the second water outlet ports is opened, the valve stem is capable of moving to a position where the first water outlet port is closed under the action of the water inlet pressure of the water inlet cavity.

In one embodiment, the water inlet cavity is communicated with a first channel communicated with the first water outlet port and a second channel communicated with the at least two second water outlet ports.

The valve stem has a first blocking portion for blocking the first channel and a second blocking portion for blocking the second channel, and a cross section of the first blocking portion is smaller than a cross section of the second blocking portion. When the second water outlet ports are closed, water in the water inlet cavity pushes the first blocking portion to move the valve stem to a position where the first water outlet port is opened. When at least one second water outlet port is opened, water in the water inlet cavity pushes the second blocking portion to move the valve stem to a position where the first water outlet port is closed, and water in the water inlet cavity is capable of flowing from between the second blocking portion and an inner wall of the second channel to the second water outlet port.

An embodiment of the present application also provides a water outlet device including a water outlet body and the waterway switching device as described above. The water outlet body is provided with at least three water dividing cavities, and each water dividing cavity is correspondingly provided with a water spray port. The first water outlet port and at least two second water outlet ports of the switching valve are respectively correspondingly communicated with one of the water dividing cavities to respectively supply water to one of the water dividing cavities, thereby causing the water outlet device to perform water discharge in at least three water outlet modes.

In one embodiment, the present application further includes a hydroelectric generator mounted in the water outlet body. The hydroelectric generator is configured for supplying power to the control module and the switching valve. The hydroelectric generator includes a housing, and an impeller, a stator and a rotor which are mounted in the housing. The housing is provided with a first chamber and a second chamber, the stator and the rotor are mounted in the second chamber, and the impeller is mounted in the first chamber and connected to the rotor.

The housing includes a housing body and a water inlet cover located at a water inlet end of the first chamber, a tapered protrusion is provided on an outer side of the water inlet cover, and a plurality of water inlet holes inclined relative to a center line are provided around the tapered protrusion. The plurality of water inlet holes are inclined towards a same direction in a circumferential direction, and water enters the first chamber from the water inlet holes and pushes the impeller to rotate.

In one embodiment, an inclination angle of the water inlet holes relative to the center line is 50°-70°.

In one embodiment, each blade of the impeller is curved and extended in a direction away from a center to form an arc-shaped structure, and a water-obstructing rib is provided at an end position of a concave side of the blade.

In one embodiment, the impeller includes an intermediate connecting portion and a plurality of blades around the intermediate connecting portion, and a circular connecting seat is further provided around the intermediate connecting portion. The circular connecting seat is connected at root positions of the plurality of blades close to the intermediate connecting portion, and the circular connecting seat tapers in diameter in a direction toward the water inlet cover.

In one embodiment, a wire diameter of a coil of the stator is 0.1mm-0.12 mm, and a number of turns of the coil is 900-1000.

In one embodiment, the water outlet device is a shower or a top sprayer.

When the water outlet device is a shower, the hydroelectric generator is disposed at a handle of the shower.

An embodiment of the present application also provides a shower, including a water outlet body, and a switching valve, a hydroelectric generator and a control module which are disposed on the water outlet body. The hydroelectric generator is electrically connected with the control module and the switching valve, the water outlet body is provided with at least two water dividing cavities, and each of the water dividing cavities is correspondingly provided with a water spray port. The switching valve includes a valve body with at least two water outlet ports, and at least two solenoid valves, and each solenoid valve is configured corresponding to one water outlet port to control opening and closing of the corresponding water outlet port. Each of the water outlet ports correspondingly communicates with one water dividing cavity to supply water to the water dividing cavity. The control module is configured to: control one solenoid valve to work and stop working of other solenoid valves except the solenoid valve, in response to a first operation information of a user, so as to turn on shower water corresponding to the solenoid valve; the first operation information being configured to control opening of the solenoid valve; and control another solenoid valve to work and control other solenoid valves except said another solenoid valve to stop working, in response to a second operation information of the user, so as to turn on shower water corresponding to said another solenoid valve; the second operation information being configured to control opening of said another solenoid valve.

In one embodiment, the switching valve includes two solenoid valves. The control module is further configured to: control both of the two solenoid valves to open, in response to a fourth operation information of the user, after a predetermined time during which the control module receives power from the hydroelectric generator; the fourth operation information being configured to control opening of the two solenoid valves; and/or keep an open state of one of the two solenoid valves or keep a closed state of the two solenoid valves, in response to a fourth operation information of the user, within a predetermined time during which the control module receives power from the hydroelectric generator; the fourth operation information being configured to control opening of the two solenoid valves.

In one embodiment, the water outlet body includes a hand-held portion and a water outlet portion, the hydroelectric generator is disposed in the hand-held portion, and the switching valve is disposed in the water outlet portion.

In one embodiment, the hydroelectric generator includes a power generation module and a water inlet cover. The power generation module is connected to an impeller to convert rotation of the impeller into electric energy. The water inlet cover is disposed upstream of the impeller, and the water inlet cover has a tapered protrusion projecting upstream, and a plurality of water inlet holes inclined with respect to a center line and provided around the tapered protrusion. The plurality of water inlet holes are inclined towards a same direction in a circumferential direction, and water enters from the water inlet holes and pushes the impeller to rotate.

In one embodiment, an inclination angle of the water inlet holes relative to the center line is 50°-70°.

In one embodiment, the valve body is provided with a water inlet cavity communicated with a water inlet channel of the water outlet body, and a movable valve stem is provided in the water inlet cavity. The at least two water outlet ports of the valve body include a first water outlet port and at least two second water outlet ports, and each solenoid valve is provided corresponding to one of the second water outlet ports. When the second water outlet ports are in a closed state, the valve stem is capable of moving to a position where the first water outlet port is opened under an action of a water inlet pressure of the water inlet cavity. When at least one of the second water outlet ports is opened, the valve stem is capable of moving to a position where the first water outlet port is closed under the action of the water inlet pressure of the water inlet cavity.

An embodiment of the present application provides a control module, which is applicable to a water outlet device provided with a switching valve having at least two solenoid valves and a hydroelectric generator. The switching valve provides at least three water outlet modes for the water outlet device. The control module, by means of responding to the operation information of the user, controls one solenoid valve corresponding to the operation information to open. In this way, when the water outlet device is just supplied with water, only one solenoid valve is allowed to be in an open state, and there is no such situation in which the water outlet mode cannot be switched due to insufficient amount of the power generated by the hydroelectric generator when two or more solenoid valves are used to open. That is, in this way, when the user switches the water outlet mode in a state that the water outlet device is just supplied with water, the problem that when the user switches the water outlet mode, the water outlet device does not switch to different water outlet modes in response to the switching action of the user will not occur.

An embodiment of the present application provides a shower, and a shower body thereof is provided with a hydroelectric generator, a switching valve and a control module. The control module, by means of the first operation information of the user, controls the solenoid valve corresponding to the operation information to work and keeps other solenoid valves in a stop-work state, and by means of the second operation information of the user, controls another solenoid valve corresponding to the operation information to work, and keeps other solenoid valves in the stop-work state. In this way, only one solenoid valve is allowed to be opened, and two or more solenoid valves are not allowed to be opened at the same time, when the shower with a plurality of solenoid valves for controlling the water outlet mode is just supplied with water, so that within a period of time during which the shower is just supplied with water, the problem that when the user switches the water outlet mode, the shower does not switch to different water outlet modes in response to the switching action of the user will not occur when the user switches the water outlet mode.

Other features and advantages of the present application will be set forth in the description which follows, and in part will become apparent from the description, or may be learned by practice of the present application. Other advantages of the present application can be realized and obtained by embodiments described in the description and the drawings.

### BRIEF DESCRIPTION OF THE DRAWINGS

The drawings are used to provide an understanding of technical schemes of the present application, and constitute a part of the specification. They are used to explain the technical schemes of the present application together with the embodiments of the present application, and do not constitute a limitation on the technical schemes of the present application.
FIG. 1 is a schematic diagram of a structure of a shower according to an embodiment of the present application.
FIG. 2 is a schematic diagram of an installation structure of a waterway switching device on a shower according to an embodiment of the present application.
FIG. 3 is a schematic diagram of a structure of the shower shown in FIG. 1 in an exploded state.
FIG. 4 is a schematic cross-sectional view of a structure of the shower shown in FIG. 1.
FIG. 5 is a schematic diagram of a structure of the shower shown in FIG. 1 taken from another position.
FIG. 6 is a schematic structural diagram of the switching valves mounted on a water dividing body of a shower according to an embodiment of the present application.
FIG. 7 is a schematic structural diagram of the structure shown in FIG. 6 taken from a valve stem.
FIG. 8 is an enlarged view of part A in FIG. 7.
FIG. 9 is a schematic structural diagram of the structure shown in FIG. 6 taken from a second solenoid valve.
FIG. 10 is a schematic structural diagram of the structure shown in FIG. 6 taken from a first solenoid valve.
FIG. 11 is a schematic diagram of a structure of a hydroelectric generator according to an embodiment of the present application.
FIG. 12 is a cross-sectional view of the hydroelectric generator shown in FIG. 11.
FIG. 13 is a cross-sectional view of the hydroelectric generator shown in FIG. 11 taken from another position.
FIG. 14 is a schematic diagram of a structure of a water inlet cover according to an embodiment of the present application.
FIG. 15 is a schematic diagram of a structure of an impeller according to an embodiment of the present application.
FIG. 16 is a schematic diagram of a structure of a control module according to an embodiment of the present application.
FIG. 17 is a schematic flow diagram of a waterway switching method according to an embodiment of the present application.
FIG. 18 is a schematic flow diagram of a waterway switching method according to another embodiment of the present application.
FIG. 19 is a schematic diagram of a waterway switching program according to an embodiment of the present application.
FIG. 20 is a schematic diagram of a waterway switching program according to another embodiment of the present application.

### Description of reference signs:

1-water outlet body; 11-mounting body; 12-fixing cover; 13-water dividing body; 14-water outlet jacket; 15-water outlet face cover; 16-water outlet core; 2-switching valve; 21-valve main body; 22-valve cover; 23-water outlet joint; 24-bushing; 25-valve stem; 251-first blocking portion; 252-second blocking portion; 253-connecting portion; 26-sealing ring; 27-first solenoid valve; 28-second solenoid valve; 3-capacitor; 4-circuit board; 5-control panel; 51-first key; 52-second key; 53-third key; 6-water inlet pipe; 7-hydroelectric generator; 71-housing body; 711-first housing portion; 712-second housing portion; 713-water outlet port; 72-water inlet cover; 721-tapered protrusion; 722-water inlet hole; 7221-inclined surface; 73-impeller; 731-intermediate connecting portion; 732-blade; 7321-water-obstructing rib; 733-circular connecting seat; 74-stator; 8-water inlet joint; 101-first water outlet port; 102-second water outlet port; 103-water inlet port; 104-water inlet cavity; 10-control module; 20-processor; 30-memory; 40-waterway switching program; 50-information receiving unit; 60-first operation unit; 70-second operation unit; 80-third operation unit.

### DETAILED DESCRIPTION

The present application describes multiple embodiments, but the description is exemplary and not limiting, and it will be apparent to those of ordinary skills in the art that more embodiments and implementations may be included within the scope of the embodiments described by the present application. Although many possible combinations of features are shown in the drawings and discussed in the detailed description, many other combinations of the disclosed features are also possible. Unless specifically limited, any feature or element of any embodiment may be used in combination with, or may substitute for, any other feature or element of any other embodiment.

The present application includes and contemplates combinations with features and elements known to those of ordinary skills in the art. The disclosed embodiments, features, and elements in the present application may also be combined with any conventional features or elements to form a unique inventive solution. Any feature or element of any embodiment may also be combined with features or elements from other inventive solutions to form another unique inventive solution. Accordingly, it should be understood that any of the features shown and/or discussed in the present application may be implemented alone or in any suitable combination. Thus, the embodiments are not subjected to limitations other than those made in accordance with the appended claims and their equivalent substitutions. In addition, various modifications and changes may be made within the protection scope of the appended claims.

Furthermore, when describing representative embodiments, the specification may have presented a method and/or process as a particular sequence of steps. However, to the extent that the method or process does not depend on the specific order of steps described herein, the method or process should not be limited to the specific order of steps described. As will be understood by those of ordinary skill in the art, other order of steps is also possible. Accordingly, the specific order of steps set forth in the specification should not be construed as limitations on the claims. Furthermore, the claims for the method and/or process should not be limited to the steps which are performed in the written order. Those skilled in the art can readily understand that these orders can be changed and the changed orders still remain within the spirit and scope of the embodiments of the present application.

An embodiment of the present application provides a control module 10 for a water outlet device. The water outlet device includes a switching valve 2, the control module 10 and a hydroelectric generator 7 for supplying power to the control module 10 and the switching valve 2.

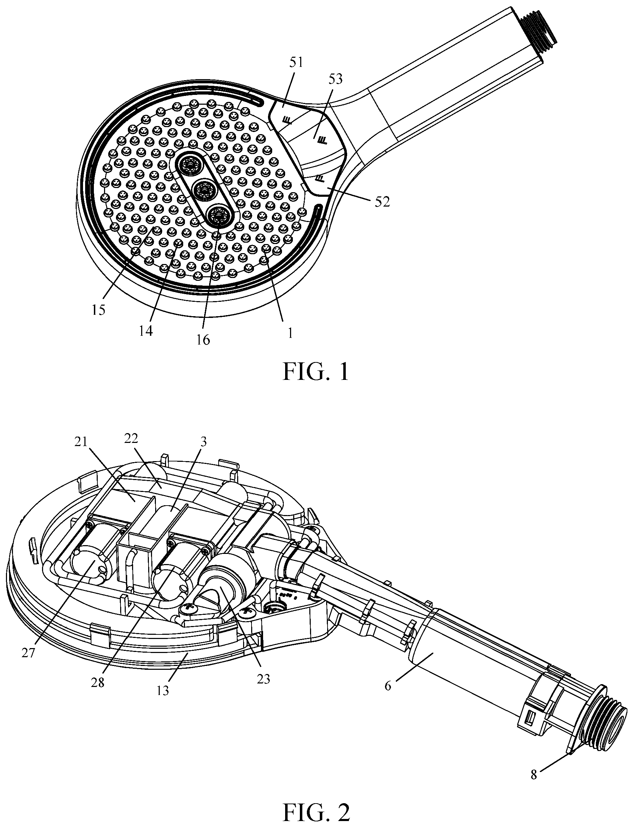

As shown in FIGS. 2 to 10, the switching valve 2 includes a valve body, a valve stem 25 and at least two solenoid valves. The valve body has a water inlet port 103, a first water outlet port 101 and at least two second water outlet ports 102, the valve stem 25 is configured for controlling the opening and closing of the first water outlet port 101, and each solenoid valve is configured for controlling the opening and closing of one second water outlet port 102 respectively. The valve body is provided with a water inlet cavity 104 communicated with the water inlet port 103, and the valve stem 25 is configured to be movably positioned in the water inlet cavity 104. When the second water outlet ports 102 are closed, the valve stem 25 can move to a position where the first water outlet port 101 is opened under the action of the water inlet pressure of the water inlet cavity 104, and when at least one water outlet port 102 is opened, the valve stem 25 can move to a position where the first water outlet port 101 is closed under the action of the water inlet pressure of the water inlet cavity 104.

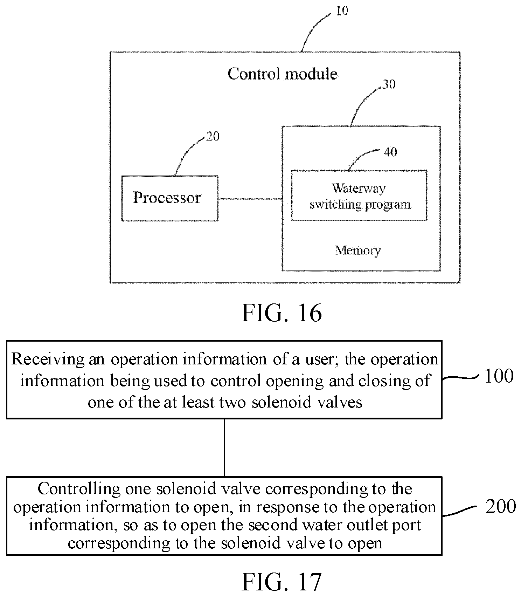

As shown in FIG. 17, the control module 10 is configured to: receive an operation information of a user, the operation information being used for controlling opening and closing of one of the at least two solenoid valves; and control one solenoid valve corresponding to the operation information to open, in response to the operation information, so as to open the second water outlet port 102 corresponding to the solenoid valve.

The control module 10 according to the embodiment of the present application is applied to a water outlet device provided with a switching valve 2 having at least two solenoid valves and a hydroelectric generator 7, and the switching valve 2 provides at least three water outlet modes for the water outlet device. In response to the operation information of the user, the control module 10 controls one solenoid valve corresponding to the operation information to open. In this way, when the water outlet device is just supplied with water, only one solenoid valve is allowed to be in an open state, and there is no such situation in which the water outlet mode cannot be switched due to insufficient amount of the power generated by the hydroelectric generator when two or more solenoid valves are used. That is, in this way, when the user switches the water outlet mode in a state that the water outlet device is just supplied with water, the problem in which when the user switches the water outlet mode, the water outlet device does not switch to different water outlet modes in response to the switching action of the user, will not occur.

In one embodiment, the at least two solenoid valves include a first solenoid valve 27 and a second solenoid valve 28. The control module 10 is further configured to: control the first solenoid valve 27 to open and keep the second solenoid valve 28 closed, in response to a first operation information of the user, so as to open the second water outlet port 102 corresponding to the first solenoid valve 27; control the second solenoid valve 28 to open and keep the first solenoid valve 27 closed, in response to a second operation information of the user, so as to open another second water outlet port 102 corresponding to the second solenoid valve 28; and/or control the first solenoid valve 27 or the second solenoid valve 28 to close in response to a third operation information of the user when the first solenoid valve 27 or the second solenoid valve 28 is opened, so as to open the first water outlet port 101.

In one embodiment, the control module 10 is further configured to: keep an open state of the first solenoid valve 27 or the second solenoid valve 28 or keep a closed state of the first solenoid valve 27 and the second solenoid valve 28 in response to a fourth operation information of the user, within a predetermined time during which the control module 10 receives power from the hydroelectric generator 7. The fourth operation information is used to control the opening of the first solenoid valve 27 and the second solenoid valve 28. That is, within the predetermined time during which the control module 10 receives power from the hydroelectric generator 7, even if the user sends the fourth operation information for controlling the opening of the two solenoid valves, the control module 10 controls the first solenoid valve 27 and the second solenoid valve 28 to keep in an original state, and a situation where the first solenoid valve 27 and the second solenoid valve 28 are opened at the same time does not occur.

Both the first solenoid valve 27 and the second solenoid valve 28 are controlled to open, in response to the fourth operation information of the user, after the predetermined time during which the control module 10 receives power from the hydroelectric generator 7, so that the two second water outlet ports 102 are simultaneously opened. The fourth operation information is used to control the opening of the first solenoid valve 27 and the second solenoid valve 28. After the predetermined time during which the hydroelectric generator 7 generates power, the water pressure is stabilized, and the amount of power generated by the hydroelectric generator is sufficient so that the first solenoid valve 27 and the second solenoid valve 28 can be opened simultaneously.

In one embodiment, the at least two solenoid valves include a first solenoid valve 27 and a second solenoid valve 28. The control module 10 is further configured to: keep the open state of the second solenoid valve 28 after controlling the first solenoid valve 27 to open in response to the first operation information of the user, when the second solenoid valve 28 is in the open state after a predetermined time during which the control module 10 receives power from the hydroelectric generator 7; and keep the open state of the first solenoid valve 27 after controlling the second solenoid valve 28 to open in response to the second operation information of the user, when the first solenoid valve 27 is in the open state.

When the second solenoid valve 28 is in the open state, if only the second water outlet port 102 corresponding to the first solenoid valve 27 is needed to discharge water, the second solenoid valve 28 can be controlled to close first, and then the first operation information can be sent to control the first solenoid valve 27 to open. Similarly, when the first solenoid valve 27 is in the open state, if only the second water outlet port 102 corresponding to the second solenoid valve 28 is needed to discharge water, the first solenoid valve 27 can be controlled to close first, and then the second operation information can be sent.

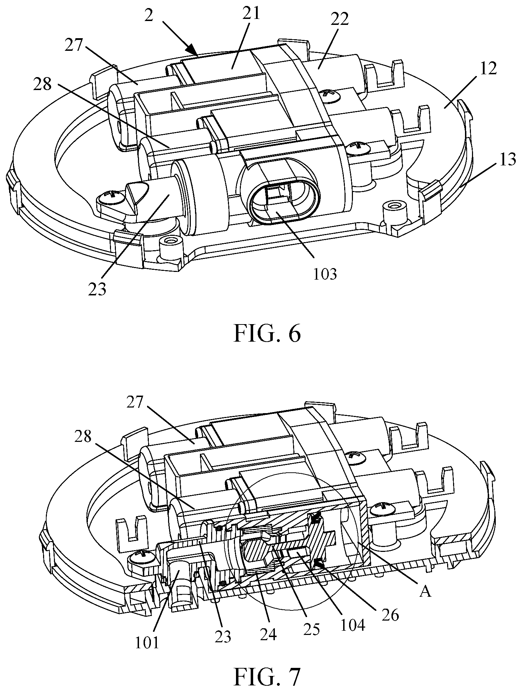

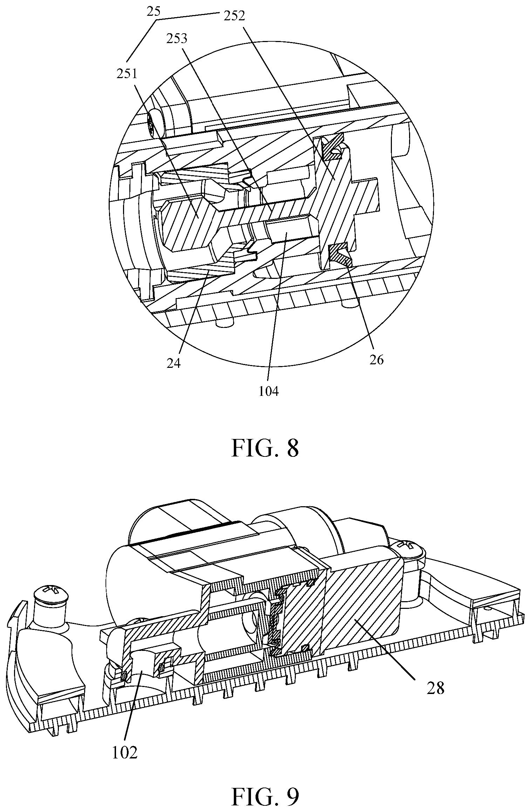

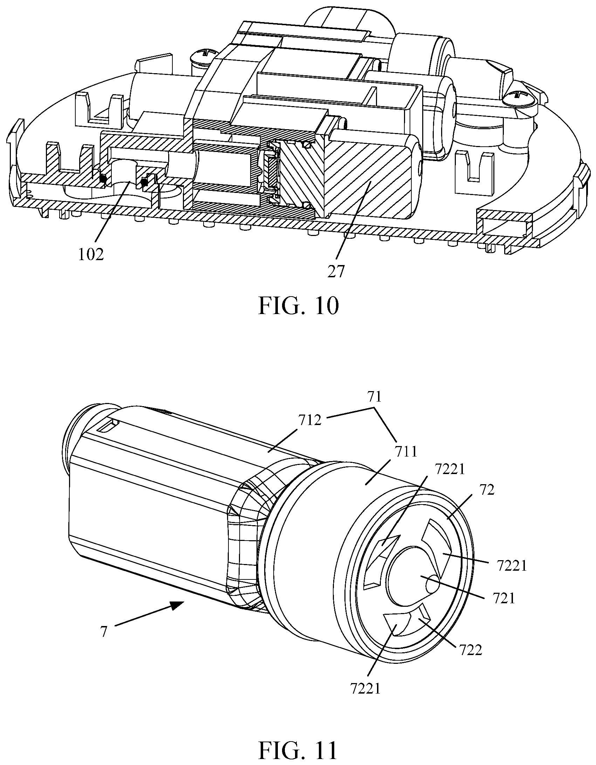

FIGS. 2-10 show a water outlet device in one embodiment, which is a shower provided with a switching valve 2. The valve body of the switching valve 2 is provided with a water inlet port 103 and a water inlet cavity 104 communicated with the water inlet port 103, and is also provided with a first water outlet port 101 and two second water outlet ports 102. FIGS. 7 and 8 show that the valve stem 25 is located in the water inlet cavity 104, and the opening and closing of the first water outlet port 101 can be controlled by moving the valve stem 25. FIG. 10 shows that the first solenoid valve 27 is disposed on a waterway corresponding to one of the second water outlet ports 102, so that the opening and closing of the second water outlet port 102 can be controlled by the first solenoid valve 27. FIG. 9 shows that the second solenoid valve 28 is disposed on a waterway corresponding to another second water outlet port 102, so that the opening and closing of another second water outlet port 102 can be controlled by the second solenoid valve 28. In other embodiments, more second water outlet ports 102 and solenoid valves corresponding to the second water outlet ports 102 may also be provided.

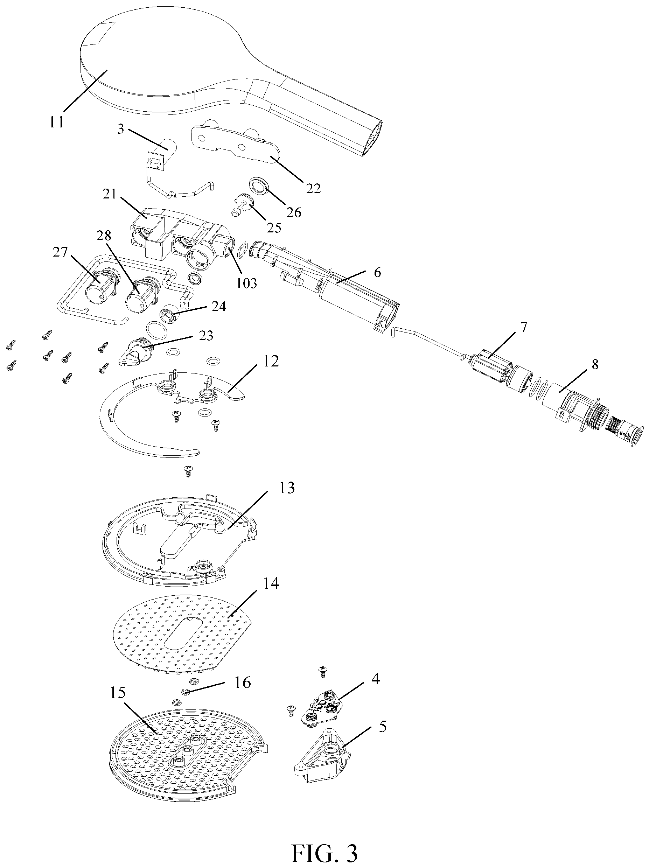

In order to facilitate the formation of the waterway inside the valve body, as shown in FIGS. 3-5, the valve body may include a valve main body 21, a valve cover 22 and a water outlet joint 23 that are fixed together. The valve cover 22 has two chambers corresponding to two second water outlet ports 102 respectively, and a chamber in the water outlet joint 23 corresponds to a third water outlet port 101. It is clear that the structure of the valve body can be variously modified, and is not limited herein.

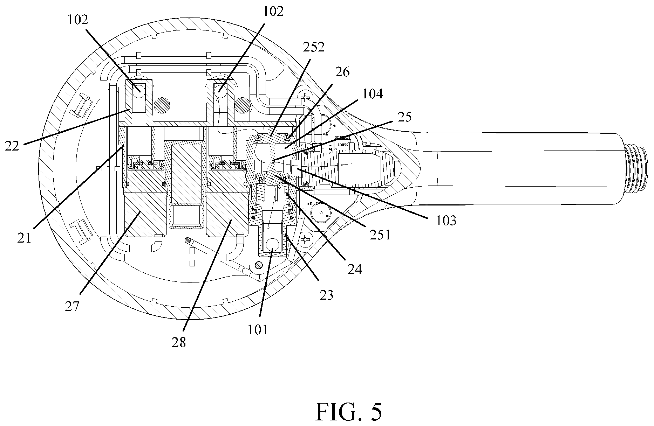

The water inlet cavity 104 is communicated with a first channel communicated with the first water outlet port 101 and a second channel communicated with the at least two second water outlet ports 102 (the channels at both ends of the water inlet cavity 104 shown in FIG. 5 are the first channel and the second channel respectively). The valve stem 25 has a first blocking portion 251 for blocking the first channel, a second blocking portion 252 for blocking the second channel, and a connecting portion 253 connecting the first blocking portion 251 and the second blocking portion 252. A cross section of the first blocking portion 251 is smaller than a cross section of the second blocking portion 252. When the second water outlet ports 102 are closed, a chamber on a side of the second blocking portion 252 toward the second water outlet port 102 is sealed. If water enters the water inlet cavity 104 from the water inlet port 103, the water in the water inlet cavity 104 can only push the first blocking portion 251 to move in a direction away from the second blocking portion 252, so that the valve stem 25 moves to a position where the first water outlet port 101 is opened. The second blocking portion 252 is configured so that the pressure in the chamber on a side of the second blocking portion 252 toward the second water outlet port 102 is released, when at least one second water outlet port 102 is opened. In this way, the water in the water inlet cavity 104 pushes the second blocking portion 252 to move in a direction away from the first blocking portion 251, the valve stem 25 moves to a position where the first water outlet port 101 is closed, and water in the water inlet cavity 104 can flow from between the second blocking portion 252 and an inner wall of the second channel to the second water outlet port 102.

A Y-shaped sealing ring 26 is provided between the second blocking portion 252 and the inner wall of the second channel where the second blocking portion 252 is located. Based on the structure of the Y-shaped sealing ring, water in the water inlet cavity 104 can flow from a gap between the sealing ring 26 and the inner wall of the second channel to the second water outlet port 102, but the water flow cannot flow from the sealing ring 26 to the water inlet cavity 104 in a reverse direction.

FIG. 5 shows a state in which the second solenoid valve 28 opens the corresponding second water outlet port 102. The water pressure in the water inlet cavity 104 pushes the second blocking portion 252 of the valve stem 25 to move in a direction away from the first blocking portion 251. The first blocking portion 251 moves following the second blocking portion 252 to abut against a bushing 24 in the first channel to block the first channel, so that the first water outlet port 101 is closed, and water in the water inlet cavity flows from the gap between the sealing ring 26 of the second blocking portion 252 and the inner wall of the second channel to the opened second water outlet port 102.

FIGS. 7 and 8 show a state in which when both of the second water outlet ports 102 are closed, the first blocking portion 251 of the valve stem 25 is pushed away from the bushing 24 in the first channel by the water pressure in the water inlet cavity 104 to open the first channel, thus opening the first water outlet port 101.

An embodiment of the present application also provides a waterway switching device, including a switching valve 2 and the control module 10 as described above.

The switching valve 2 may adopt a structure as shown in FIGS. 2 to 10, and the switching valve 2 includes a valve body, a valve stem 25 and at least two solenoid valves. The valve body has a water inlet port 103, a first water outlet port 101 and at least two second water outlet ports 102, the valve stem 25 is configured for controlling the opening and closing of the first water outlet port 101, and each solenoid valve is configured for controlling the opening and closing of one of the second water outlet ports 102 respectively. The valve body is provided with a water inlet cavity 104 communicated with the water inlet port 103, and the valve stem 25 is configured to be movably positioned in the water inlet cavity 104. When the second water outlet ports 102 are closed, the valve stem 25 can move to a position where the first water outlet port 101 is opened under the action of the water inlet pressure of the water inlet cavity 104. When at least one water outlet port 102 is opened, the valve stem 25 can move to a position where the first water outlet port 101 is closed under the action of the water inlet pressure of the water inlet cavity 104.

In the example of FIGS. 2-10, the water inlet cavity 104 is communicated with a first channel communicated with the first water outlet port 101 and a second channel communicated with the at least two second water outlet ports 102. The valve stem 25 has a first blocking portion 251 for blocking the first channel, a second blocking portion 252 for blocking the second channel, and a connecting portion 253 connecting the first blocking portion 251 and the second blocking portion 252. The cross section of the first blocking portion 251 is smaller than the cross section of the second blocking portion 252. When the second water outlet ports 102 are closed, the chamber on a side of the second blocking portion 252 toward the second water outlet port 102 is sealed. If water enters the water inlet cavity 104 from the water inlet port 103, the water in the water inlet cavity 104 can only push the first blocking portion 251 to move in a direction away from the second blocking portion 252, so that the valve stem 25 moves to a position where the first water outlet port 101 is opened. The second blocking portion 252 is configured so that the pressure in the chamber on a side of the second blocking portion 252 toward the second water outlet port 102 is released when at least one second water outlet port 102 is opened, so that the water in the water inlet cavity 104 pushes the second blocking portion 252 to move in a direction away from the first blocking portion 251, the valve stem 25 moves to a position where the first water outlet port 101 is closed, and water in the water inlet cavity 104 can flow from between the second blocking portion 252 and an inner wall of the second channel to the second water outlet port 102.

A water outlet device according to an embodiment of the present application includes a water outlet body 1 and a waterway switching device as described above mounted on the water outlet body 1. The water outlet body 1 is provided with at least three water dividing cavities, and each water dividing cavity is correspondingly provided with a water spray port. The first water outlet port 101 and at least two second water outlet ports 102 of the switching valve 2 are respectively correspondingly communicated with one water dividing cavity to respectively supply water to one water dividing cavity, thereby causing the water outlet device to discharge water in at least three water outlet modes.

In the embodiment of FIGS. 1-5, the water outlet device is a shower, and it is clear that the water outlet device can also be other devices capable of discharging water, such as a faucet and a top sprayer.

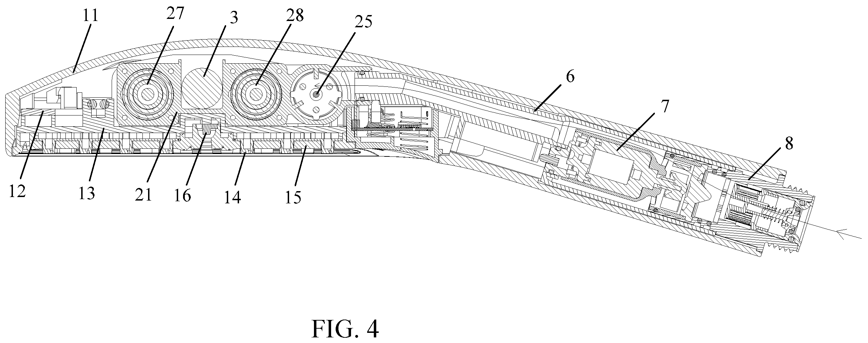

As shown in FIGS. 3 and 4, the water outlet body 1 includes a mounting body 11, a water dividing body 13 fixed to the mounting body 11, and a fixing cover 12 fixed to the water dividing body 13. The water dividing body 13 and the fixing cover 12 serve as partition members to partition and form three different water dividing cavities on the water outlet body 1, and the specific arrangement of the water dividing cavities will not be described in detail here. The water outlet body 1 further includes a water outlet component. The water outlet component may include a water outlet jacket 14, a water outlet face cover 15 and water outlet cores 16 mounted on the water outlet face cover 15. A plurality of water outlet nozzles of the water outlet jacket 14, a plurality of openings at the periphery of the water outlet face cover 15, and the water outlet cores 16 are respectively communicated with one water dividing cavity. Therefore, the water outlet device has three water outlet modes: discharging water from all of the plurality of water outlet nozzles of the water outlet jacket 14, discharging water from the water outlet holes at the periphery of the water outlet face cover 15, and discharging water from the water outlet cores 16 (i.e., the water outlet nozzles of the water outlet jacket 14, the openings of the water outlet face cover 15 and the water outlet cores 16 each are used as a water spray port of one water dividing cavity). The first water outlet port 101 and two second water outlet ports 102 each supply water to one water dividing cavity, so that whether to supply water to the three water dividing cavities of the water outlet body 1 can be controlled by controlling the opening and closing of the three water outlet ports, thus controlling the water outlet mode of the water outlet device. It can be understood that in other embodiments, the water outlet port corresponding to one solenoid valve may correspond to two or more water dividing cavities, and one water dividing cavity communicates with one type of water outlet nozzle for providing a shower spray.

In one embodiment, the water outlet device includes a hydroelectric generator 7 mounted on a water inlet channel of the water outlet body 1, and the hydroelectric generator 7 supplies power to the switching valve 2 and the control module 10 in the waterway switching device. The power is supplied by the hydroelectric generator 7, and there is no need to install batteries, thereby reducing the constraints of product packaging, transportation and storage environment.

Referring to the example of FIGS. 3 and 4, the water outlet device is a shower, and the water inlet channel of the water outlet body 1 is a water inlet pipe 6 connected to a shower head. The water inlet pipe 6 is connected with a water inlet joint 8, the hydroelectric generator 7 is mounted in the water inlet pipe 6, and the hydroelectric generator 7 can generate electricity by water in the process of water flow entering the water inlet pipe 6.

In one embodiment, the hydroelectric generator 7 is connected with a capacitor 3, and the hydroelectric generator 7 charges the capacitor 3, and supplies power to the solenoid valve in the switching valve 2 and the control module 10 through the capacitor 3. The capacitor 3 may be mounted on the valve body of the switching valve 2. As shown in FIGS. 3 and 5, the capacitor 3 may be mounted in a position of the valve body between the two solenoid valves.

The capacitor 3 can stabilize and filter voltage, reduce power consumption, and realize quick power-on under low water pressure, so that the water outlet device can immediately realize waterway switching when the water outlet device is in low water pressure. After the water outlet device is not used for a long time, there is no need to wait and the waterway can be switched immediately when the waterway is opened upon first use.

In one example, the capacitor 3 has a capacity of 4000-8000 µF. When the capacity is less than the data, the capacity of the capacitor 3 is insufficient to supply power to the control module 10 and the solenoid valve. When the capacity is greater than the data, the time for the hydroelectric generator to charge the capacitor 3 is prolonged, and it cannot be switched when the water pressure is low, or after a long period of non-use, the first water supply needs to wait for a long time.

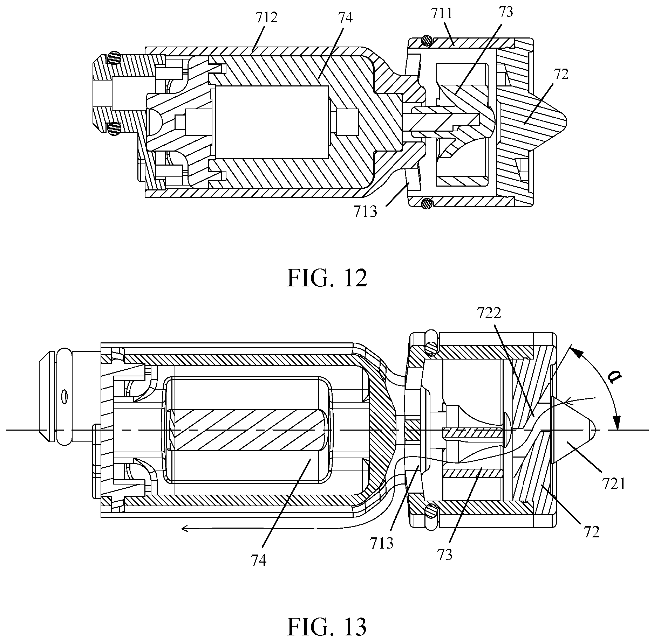

In the embodiment shown in FIGS. 11-13, the hydroelectric generator 7 includes a housing, and an impeller 73, a stator 74, and a rotor (not shown) which are mounted in the housing. The housing is provided with a first chamber and a second chamber, the stator 74 and the rotor are mounted in the second chamber, and the impeller 73 is mounted in the first chamber and connected to the rotor.

The housing includes a housing body 71 and a water inlet cover 72 located at a water inlet end of the first chamber, a tapered protrusion 721 is provided on an outer side of the water inlet cover 72, and a plurality of water inlet holes 722 inclined relative to a center line (the center line of the hydroelectric generator) are provided around the tapered protrusion 721. The plurality of water inlet holes 722 are inclined in the same circumferential direction, so that water rotates and flows when entering the first chamber from the inclined water inlet holes 722 and pushes the impeller 73 to rotate, and the impeller 73 drives the rotor to rotate, thus generating power.

The housing body 71 may include a first housing portion 711 and a second housing portion 712, the first housing portion 711 cooperates with the water inlet cover 72 to form the first chamber, and the second chamber is formed in the second housing portion 712. The first housing portion 711 has a water outlet port 713, and the water drives the impeller 73 to rotate after entering the first chamber from the water inlet cover 72 and flows out of the water outlet port 713.

By providing the tapered protrusion 721 on the outer side of the water inlet cover 72, an area of a water flow impact plane at the water inlet end of the housing can be reduced, thereby reducing the loss of hydraulic energy, so that water can enter the water inlet holes 722 with a large impact force. After the water flow enters a first chamber from the plurality of water inlet holes 722 in an inclined manner, the water will form a rotating water flow, thereby impacting the impeller 73 to rotate. In this way, the power generation amount of the hydroelectric generator can be effectively improved, and when the hydroelectric generator is used for the shower, the shower can generate high power generation amount even when the water pressure is low, and quick power-on is realized, so that the problem of insufficient power supply of the hydroelectric generator in the prior art can be solved.

In one embodiment, an inclination angle α of the water inlet holes 722 on the water inlet cover 72 relative to the center line is 50°-70°, which can produce the maximum impact force and the fastest impeller rotation speed when the water pressure and flow conditions are constant. When the inclination angle is less than 50°, a downward vertical component of the rotation speed of the impeller 73 is slowed by the water inlet holes. When the inclination angle is greater than 70°, a water-obstructing surface of the impeller 73 is insufficient, leading to hydraulic energy loss, and the rotation speed of the impeller 73 is slowed down.

In the example shown in FIGS. 11 and 13 to 14, three water inlet holes 722 are provided in the water inlet cover 72. Each water inlet hole 722 has an inclined surface 7221 along which water flow enters the first chamber. The inclined surface 7221 determines the inclination angle α of the water inlet hole 722 with respect to the axis of the impeller 73.

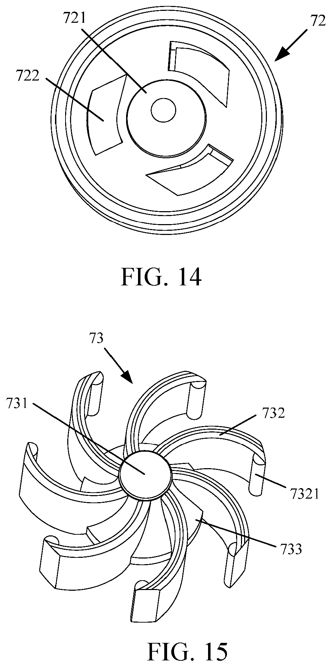

In one embodiment, the structure of the impeller 73 is shown in FIG. 15, the impeller 73 includes an intermediate connecting portion 731 and a plurality of blades 732 around the intermediate connecting portion 731, and each blade 732 of the impeller 73 is curved and extended in a direction away from the center to form an arc-shaped structure. A water-obstructing rib 7321 is provided at an end position of a concave side of the blade 732, and the water-obstructing rib 7321 can reduce the amount of the outwardly discharged water after the water from the water inlet hole 722 hits the blade, thus reducing hydraulic loss and increasing impact force.

In one embodiment, the impeller 73 further includes a circular connecting seat 733 disposed around the intermediate connecting portion 731, the circular connecting seat 733 is connected at root positions of the plurality of blades 732 close to the intermediate connecting portion 731, and the circular connecting seat 733 tapers in diameter in a direction toward the water inlet cover 72. The circular connecting seat 733 disposed at the root position of the impeller 73 can reinforce the blades 732 and prevent the blades 732 from being deformed by hydraulic impact. A part between adjacent blades 732 are hollowed out at a position away from the circular connecting seat 733 for discharging water after inclined water impacts the impeller 73, and reducing the accumulation of water flow between the blades 732, which could otherwise affect the rotation of the impeller 73. The circular connecting seat 733 tapers in diameter in the direction toward the water inlet cover 72, which facilitates the water to flow out after impacting the circular connecting seat 733 and sliding into the hollowed-out position between the blades along the surface.

In one embodiment, a wire diameter of a coil on the stator 74 is 0.1-0.12 mm and the number of turns of the coil is 900-1000. When such data is used under the same housing space, the same water pressure and flow, the maximum voltage and current can be generated. When the wire diameter is less than 0.1-0.12 mm and the number of turns is more than 900-1000, the generated voltage becomes larger but the current becomes smaller, and when the wire diameter is larger than 0.1-0.12 mm and the number of turns is less than 900-1000, the generated voltage becomes smaller but the current becomes larger.

In the embodiment of the present application, the power generation of the hydroelectric generator can be effectively increased by improving the structures of the water inlet cover 72 and the impeller 73 and setting the parameters of the coil on the stator 74.

In one embodiment, the control module 10 may include a circuit board 4 and a control panel 5 connected to the circuit board 4. A plurality of keys may be provided on the control panel 5, and the user inputs operation information to the control module 10 through the keys to control the solenoid valves. In other embodiments, the keys may be touch-sensitive keys.

In the example of FIGS. 1 to 3, the control module 10 is mounted in the shower, and the control panel 5 is provided at a part of the shower that is convenient to control. A first key 51, a second key 52, and a third key 53 are provided on the control panel 5. When the user performs a first operation, the first key 51 is pressed to control the first solenoid valve 27 to open. When the user performs the second operation, the second key 52 is pressed to control the second solenoid valve 28 to open. When the user performs the third operation, the third key 53 is pressed to control all solenoid valves to be closed. It is clear that, when the user needs to perform additional operations, more keys can be provided.

In addition, each key may also be provided with an indicator lamp. When the key is in a turned-on state, the corresponding indicator lamp lights up, and when the key is turned off, the corresponding indicator lamp goes out. This allows the user to clearly know which key is in the working state.

It is clear that the control module 10 may also be provided with other user operation modes, such as operating by a knob to control the control module 10.

An embodiment of the present application also provides a shower, including a water outlet body 1, and a switching valve 2, a hydroelectric generator 7 and a control module 10 which are disposed on the water outlet body 1. The hydroelectric generator 7 is electrically connected with the control module 10 and the switching valve 2, the water outlet body 1 is provided with at least two water dividing cavities, and each water dividing cavity is correspondingly provided with a water spray port. The switching valve 2 includes a valve body with at least two water outlet ports and at least two solenoid valves, and each solenoid valve is configured corresponding to one of the water outlet ports to control the opening and closing of the corresponding water outlet port. Each of the water outlet ports correspondingly communicates with one of the water dividing cavities to supply water to the water dividing cavity. The control module 10 is configured to: control one solenoid valve to work and stop the working of other solenoid valves except the solenoid valve, in response to a first operation information of the user, so as to turn on the shower water corresponding to the solenoid valve, the first operation information being used to control the opening of the solenoid valve; and control another solenoid valve to work and control other solenoid valves except said another solenoid valve to stop working, in response to a second operation information of the user, so as to turn on the shower water corresponding to said another solenoid valve, the second operation information being used to control the opening of said another solenoid valve.

In one embodiment, the switching valve includes two solenoid valves, and the control module 10 is further configured to: control the two solenoid valves to open, in response to a fourth operation information of the user, after a predetermined time during which the control module 10 receives power from the hydroelectric generator 7, the fourth operation information being used to control the opening of the two solenoid valves; and/or keep an open state of one of the two solenoid valves or keep a closed state of the two solenoid valves, in response to a fourth operation information of the user, within a predetermined time during which the control module 10 receives power from the hydroelectric generator 7, the fourth operation information being used to control the opening of the two solenoid valves.

In one embodiment, the water outlet body 1 includes a hand-held portion and a water outlet portion (i.e., a shower head). The hydroelectric generator 7 is disposed in the hand-held portion, and a water inlet channel is provided in the hand-held portion. The hydroelectric generator 7 generates electricity under the action of hydraulic power during the water intake through the water inlet channel, and the switching valve 2 is disposed in the water outlet portion.

In one embodiment, the shower further includes a hydroelectric generator 7 mounted in the water inlet channel of the hand-held portion, and the hydroelectric generator 7 supplies power to the solenoid valve and the control module 10. The hydroelectric generator 7 includes a power generation module having a rotor and a stator and a water inlet cover 72. The power generation module is connected to the impeller 73 to convert the rotation of the impeller 73 into electric energy. The water inlet cover 72 is disposed upstream of the impeller 73. The water inlet cover 72 has a tapered protrusion 721 projecting upstream and a plurality of water inlet holes 722 inclined with respect to a center line and provided around the tapered protrusion 721. The plurality of water inlet holes 722 are inclined towards the same direction in the circumferential direction, and water enters from the water inlet holes 722 to push the impeller 73 to rotate. In one example, an inclination angle of the water inlet holes 722 relative to the center line is 50°-70°.

In one embodiment, the valve body of the switching valve 2 is provided with a water inlet cavity 104 communicated with a water inlet channel of the water outlet body 1, and a movable valve stem 25 is provided in the water inlet cavity. The at least two water outlet ports of the valve body include a first water outlet port 101 and at least two second water outlet ports 102, and each solenoid valve is provided corresponding to one of the second water outlet ports 102. When the second water outlet ports 102 are in a closed state, the valve stem 25 can move to a position where the first water outlet port 101 is opened under the action of the water inlet pressure of the water inlet cavity. When at least one of the second water outlet ports 102 is opened, the valve stem 25 can move to a position where the first water outlet port 101 is closed under the action of the water inlet pressure of the water inlet cavity.

In one embodiment, the control module 10 is applied to the switching valve 2, the water outlet device, the shower and/or the top sprayer described above. The present application takes application to a shower as an example, and in other embodiments, the control module 10 of the present application can also be applied to a water outlet device such as a top sprayer or a faucet. For example, referring to FIG. 16, the control module 10 includes a processor 20 and a memory 30. The memory 30 stores a waterway switching program 40 that implements a waterway switching method when executed by the processor 20. As shown in FIG. 17, the waterway switching method includes the following steps.

S100, receiving an operation information of a user; the operation information being used to control opening and closing of one of the at least two solenoid valves. For example, the operation information is a signal triggered by the user operating one of the first key 51, the second key 52, and the third key 53 on the control panel. In the present embodiment, each trigger action triggers an operation information. The first operation information is triggered and generated when the first key 51 is operated, the second operation information is triggered and generated when the second key 52 is operated, and the third operation information is triggered and generated when the third key 53 is operated. The first operation information and the second operation information are only used for controlling one solenoid valve to work, so that the shower is switched to the water outlet mode corresponding to the triggered key. The third operation information is used to control two solenoid valves to stop working.

S200, controlling one solenoid valve corresponding to the operation information to open, in response to the operation information, so as to open the second water outlet port 102 corresponding to the solenoid valve. According to the received operation information being generated by triggering, the control device controls the solenoid valve corresponding to the operation information to work so as to open a waterway corresponding to the solenoid valve. In this embodiment, taking the above-mentioned switching valve 2 with the valve stem 25 as an example, the valve stem 25 is at a position where the first water outlet port 101 is opened when the solenoid valve is not controlled in the working state. When the control device controls a solenoid valve to open according to an operation information, the valve stem 25 moves to a position where the first water outlet port 101 is closed under the water pressure of the water inlet cavity 104, and at this time, the shower sprays water in the water outlet mode corresponding to the opened solenoid valve.

In one embodiment, the shower may further include a water dividing cavity communicated with the water inlet port 103 thereof, and the water dividing cavity is kept in communication with the water inlet port 103. When the control device controls a solenoid valve to open, the water dividing cavity corresponding to the solenoid valve is simultaneously communicated with the water inlet port 103, that is, by controlling one solenoid valve to work, the water outlet mode of two kinds of water sprays can be realized by the shower. It will be appreciated that, in this embodiment, the shower may not be equipped with the aforementioned valve stem 25.

By means of steps S100 and S200, only one solenoid valve is allowed to be in the open state in response to the operation of the user in a state at the beginning of supplying water to the shower, and there is no problem that the water outlet mode cannot be switched due to insufficient power generated by the hydroelectric generator when two or more solenoid valves are opened. That is, in this way, when the user switches the water outlet mode in a state that the water outlet device is just supplied with water, the problem that when the user switches the water outlet mode, the water outlet device does not switch to different water outlet modes in response to the switching action of the user will not occur.

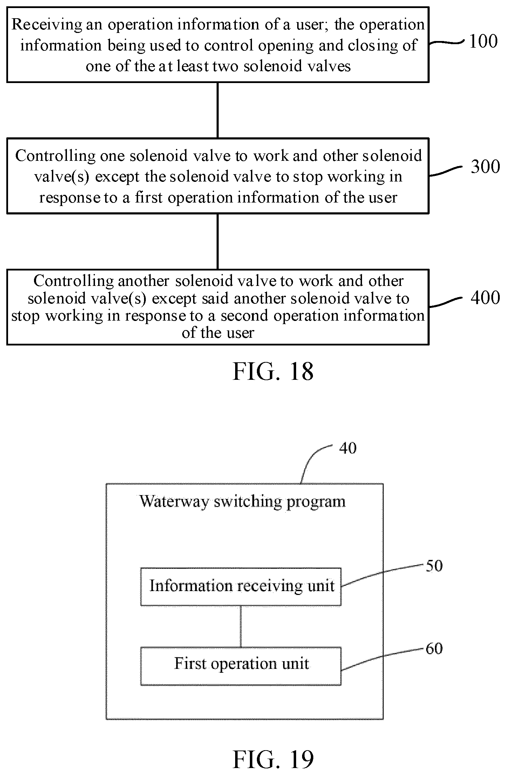

In one embodiment, referring to FIG. 18, when the waterway switching program 40 is executed by the processor 20, implementing the waterway switching method further includes the following steps.

S300, controlling one solenoid valve to work and stop the working of other solenoid valve(s) except the solenoid valve, in response to a first operation information of the user, so as to turn on the shower water corresponding to the solenoid valve; the first operation information being used to control the opening of the solenoid valve, and the first operation information being an operation information triggered by the user operating the first key 51.

S400, controlling another solenoid valve to work and controlling other solenoid valve(s) except said another solenoid valve to stop working, in response to a second operation information of the user, so as to turn on the shower water corresponding to said another solenoid valve; the second operation information being used to control the opening of said another solenoid valve, and the second operation information being an operation information triggered by the user operating the second key 52.

Unlike step S200, in step S400, one operation of the user is used to manipulate the corresponding solenoid valve to open, while the closing of other solenoid valve(s) may be performed by other trigger action of the user. In steps S300 and S400, in the stage where the water pressure is still unstable, one solenoid valve is controlled to open in response to a trigger action of the user, while other solenoid valve(s) are controlled to be closed. Therefore, the problem that the solenoid valve stops working by insufficient power supply due to the need to open two solenoid valves to simultaneously work since the user operates a different key (that is, even if the user misoperates) can be avoided by controlling other solenoid valve(s) to be closed according to the scheme of the present embodiment. In a scheme having a program module for implementing steps S200, S300, and S400 at the same time, there is no time-sequential relationship between steps S200, S300, and S400.

In one embodiment, when the waterway switching program 40 is executed by the processor 20, implementing the waterway switching method may further include:

S500, controlling both the first solenoid valve and the second solenoid valve to open, in response to a fourth operation information of a user, after a predetermined time during which the control module 10 receives power from the hydroelectric generator. The fourth operation information is used to control the first solenoid valve and the second solenoid valve to open. After the predetermined time during which the hydroelectric generator 7 generates power, the water pressure is stabilized, and the hydroelectric generator 7 can generate sufficient amount of power, so that the first solenoid valve and the second solenoid valve can be opened simultaneously.

The first solenoid valve or the second solenoid valve is kept in an open state or the first solenoid valve and the second solenoid valve are kept in a closed state, in response to the fourth operation information of the user, within a predetermined time during which the control module 10 receives power from the hydroelectric generator; the fourth operation information being used to control the opening of the first solenoid valve and the second solenoid valve. Within the predetermined time during which the hydroelectric generator generates power, the water pressure is unstable and the amount of electricity generated by the hydroelectric generator 7 is insufficient. Therefore, the first solenoid valve and the second solenoid valve remain in the original state when the user triggers the fourth operation information.

In one embodiment, when the waterway switching program 40 is executed by the processor 20, implementing the waterway switching method may further include:

S600, keeping the open state of the second solenoid valve 28 after controlling the first solenoid valve 27 to open in response to the first operation information of the user, when the second solenoid valve 28 is in the open state after the predetermined time during which the control module 10 receives power from the hydroelectric generator 7; and keeping the open state of the first solenoid valve 27 after controlling the second solenoid valve 28 to open in response to the second operation information of the user, when the first solenoid valve 27 is in the open state.

That is, after the predetermined time during which the hydroelectric generator 7 generates power, the water pressure is stabilized, and the hydroelectric generator 7 can generate a sufficient amount of electricity so that the first solenoid valve and the second solenoid valve can be opened simultaneously.

An embodiment of the present application also provides a control module 10, and the control module 10 is applied to the switching valve 2, the water outlet device, the shower and/or the top sprayer described above. The present application takes application to a shower as an example, and in other embodiments, the control module 10 of the present application can also be applied to a water outlet device such as a top sprayer or a faucet. For example, the control module 10 includes a processor 20 and a memory 30 storing a waterway switching program 40. The waterway switching program 40 can be divided into a plurality of devices, modules or units, and the plurality of devices, modules or units obtained by dividing can be executed by the processor 20 to implement the steps of the intelligent water outlet device control method as described above.

For example, as shown in FIG. 19, the waterway switching program 40 can be divided into an information receiving unit 50 and a control unit.

The information receiving unit 50 is used to receive an operation information of the user; and the operation information is used for controlling opening and closing of one of the at least two solenoid valves. For example, the operation information is a signal triggered by the user operating one of the first key 51, the second key 52, and the third key 53 on the control panel. In the present embodiment, each trigger action triggers an operation information. The first operation information is triggered and generated when the first key 51 is operated, the second operation information is triggered and generated when the second key 52 is operated, and the third operation information is triggered and generated when the third key 53 is operated. The first operation information and the second operation information are only used for controlling one solenoid valve to work, so that the shower is switched to the water outlet mode corresponding to the triggered key. The third operation information is used to control the two solenoid valves to stop working.

The control unit includes a first operation unit 60 for controlling one solenoid valve corresponding to the operation information to open in response to the operation information, so as to open one second water outlet port corresponding to the solenoid valve. According to the received operation information being generated by triggering, the control device controls the solenoid valve corresponding to the operation information to work so as to open the waterway corresponding to the solenoid valve. In this embodiment, taking the above-mentioned switching valve 2 with the valve stem 25 as an example, the valve stem 25 is at a position where the first water outlet port 101 is opened when the solenoid valve is not controlled in the working state. When the control device controls a solenoid valve to open according to an operation information, the valve stem 25 moves to a position where the first water outlet port is closed under the water pressure of the water inlet cavity 104, and at this time, the shower only sprays water in the water outlet mode corresponding to the opened solenoid valve.

In one embodiment, the shower include a water dividing cavity communicated with the water inlet port 103 thereof, and the water dividing cavity is kept in communication with the water inlet port 103. When the control device controls a solenoid valve to open, the water dividing cavity corresponding to the solenoid valve is simultaneously communicated with the water inlet port 103, that is, by controlling one solenoid valve to work, the water outlet mode of two kinds of water sprays can be realized by the shower. It will be appreciated that, in this embodiment, the shower may not be equipped with the aforementioned valve stem 25.

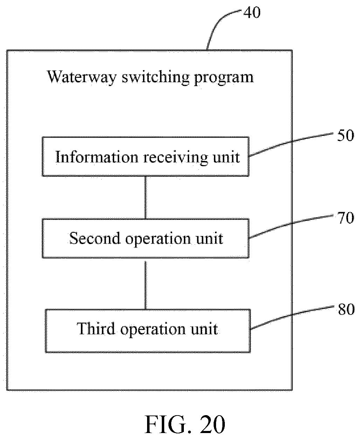

In one embodiment, as shown in FIG. 20, the control unit further includes a second operation unit 70 for controlling one solenoid valve to work and stopping the working of other solenoid valve(s) except the solenoid valve in response to the first operation information of the user so as to turn on the shower water corresponding to the solenoid valve. The first operation information is used to control the opening of the solenoid valve, and the first operation information is an operation information triggered by the user operating the first key 51.

The control unit further includes a third operation unit 80. The third operation unit 80 is also used for controlling another solenoid valve to work and controlling other solenoid valve(s) except said another solenoid valve to stop working, in response to a second operation information of the user, so as to turn on the shower water corresponding to said another solenoid valve. The second operation information is used to control the opening of said another solenoid valve, and the second operation information is an operation information triggered by the user operating the second key 52.

In other embodiments, the control unit simultaneously includes a first operation unit 60, a second operation unit 70, and a third operation unit 80. When the first operation unit 60, the second operation unit 70, and the third operation unit 80 are executed for products with different specifications, the waterway switching method as described above is realized.

In one embodiment, the control unit further includes a fourth operation unit for controlling both the first solenoid valve and the second solenoid valve to open, in response to fourth operation information of the user, after a predetermined time during which the control module 10 receives power from the hydroelectric generator.

In one embodiment, the control unit further includes a fifth operation unit for keeping the open state of the second solenoid valve 28 after controlling the first solenoid valve 27 to open in response to the first operation information of the user, when the second solenoid valve 28 is in the open state after a predetermined time during which the control module 10 receives power from the hydroelectric generator 7.

The steps of the aforementioned waterway switching method are implemented when the fourth operation unit and the fifth operation unit are executed by the processor 20.

In the description of the present application, it is to be understood that the orientations or position relationships indicated by the terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential" and the like are based on those shown in the drawings, which are only for convenience of describing the present application and simplifying the description and are not intended to indicate or imply that the referred device or element must have a particular orientation, or is constructed and operated in a particular orientation and therefore cannot be construed as a limitation on the present application.

Furthermore, the terms "first", "second" and the like are only used for descriptive purposes and cannot be understood to indicate or imply relative importance or imply the number of technical features indicated. Thus, a feature defined with "first", "second" or the like may explicitly or implicitly include at least one of the features.

In the description of the present application, "multiple/a plurality of" means at least two, e.g. two, three and the like unless expressly specified otherwise.

In the present application, unless otherwise expressly specified and qualified, terms "mount", "couple", "connect", "fix" and the like shall be understood in a broad sense. For example, "connect" may be a fixed connection, a detachable connection or an integrated connection; it may be a mechanical connection or an electrical connection; it may be a direct connection or an indirect connection through an intermediate medium, or may be an internal communication between two elements or an interactive relationship between two elements, unless otherwise expressly defined. For those of ordinary skills in the art, specific meanings of the above terms in the present application can be understood according to specific situations.

In the present application, the first feature being "above" or "below" the second feature may be a direct contact between the first and second features, or an indirect contact between the first and second features via an intermediary, unless otherwise expressly specified and defined. Moreover, the first feature being "on", "above" and "over" the second feature may be the first feature being directly above or obliquely above the second feature, or simply indicate that the level of the first feature is higher than that of the second feature. The first feature being "under", "below" and "underneath" the second feature may mean that the first feature is directly below or obliquely below the second feature, or simply mean that the level of the first feature is less than that of the second feature.

In the description of this specification, descriptions with reference to terms "one embodiment", "some embodiments", "example", "specific example" or "some examples", and the like mean that specific features, structures, materials, or characteristics described in conjunction with the embodiment or example are included in at least one embodiment or example of the present application. In this specification, the schematic illustration of the above terms does not need to be directed to the same embodiments or examples. Further, the specific features, structures, materials, or characteristics described may be combined in a suitable manner in any one or more embodiments or examples. Further, those skilled in the art may incorporate and combine different embodiments or examples and features of different embodiments or examples described in this specification if there is no conflict.

Although the embodiments of the present application have been illustrated and described above, it may be understood that the above-described embodiments are exemplary and cannot be construed as a restriction on the present application. Changes, modifications, substitutions and variations may be made to the above-described embodiments by those of ordinary skills in the art within the scope of the present application.

From the foregoing, it will be appreciated that specific embodiments of the invention have been described herein for purposes of illustration, but that various modifications may be made without deviating from the scope of the invention. Accordingly, the invention is not limited except as by the appended claims.

## Claims

1. A control module (10) for a water outlet device, wherein the water outlet device comprises a switching valve (2), a control module (10), and a hydroelectric generator (7); the hydroelectric generator (7) is configured for supplying power to the control module (10) and the switching valve (2), the switching valve (2) comprises a valve body, a valve stem (25), and at least two solenoid valves, the valve body has a water inlet port (103), a first water outlet port (101), and at least two second water outlet ports (102), the valve stem (25) is configured for controlling opening and closing of the first water outlet port (101), and each solenoid valve is configured for respectively controlling opening and closing of one of the second water outlet ports (102); the valve body is provided with a water inlet cavity (104) communicated with the water inlet port (103), and the valve stem (25) is configured to be movably positioned in the water inlet cavity (104); when the second water outlet ports (102) are all in a closed state, the valve stem (25) is capable of moving to a position where the first water outlet port (101) is opened under an action of a water inlet pressure of the water inlet cavity (104); when at least one of the second water outlet ports (102) is opened, the valve stem (25) is capable of moving to a position where the first water outlet port (101) is closed under the action of the water inlet pressure of the water inlet cavity (104);
the control module (10) is configured to:
receive an operation information of a user, the operation information being configured for controlling opening and closing of one of the at least two solenoid valves; and
control one solenoid valve corresponding to the operation information to open, in response to the operation information, so as to open a second water outlet port (102) corresponding to the solenoid valve.

2. The control module (10) of claim 1, wherein the at least two solenoid valves comprise a first solenoid valve (27) and a second solenoid valve (28), and the control module (10) is further configured to:
control the first solenoid valve (27) to open and keep the second solenoid valve (28) closed in response to a first operation information of the user;
control the second solenoid valve (28) to open and keep the first solenoid valve (27) closed in response to a second operation information of the user; and/or
control the first solenoid valve (27) or the second solenoid valve (28) to close, in response to a third operation information of the user when the first solenoid valve (27) or the second solenoid valve (28) is opened, so as to open the first water outlet port (101).

3. The control module (10) of claim 2, wherein the control module (10) is further configured to:
control both the first solenoid valve (27) and the second solenoid valve (28) to open, in response to a fourth operation information of the user, after a predetermined time during which the control module (10) receives power from the hydroelectric generator (7); wherein the fourth operation information is configured to control opening of the first solenoid valve (27) and the second solenoid valve (28); and/or
keep an open state of the first solenoid valve (27) or the second solenoid valve (28) or a closed state of the first solenoid valve (27) and the second solenoid valve (28), in response to a fourth operation information of the user, within a predetermined time during which the control module (10) receives power from the hydroelectric generator (7); wherein the fourth operation information is configured to control opening of the first solenoid valve (27) and the second solenoid valve (28).

4. The control module (10) of claim 1, wherein the at least two solenoid valves comprise a first solenoid valve (27) and a second solenoid valve (28), and the control module (10) is further configured to:
keep an open state of the second solenoid valve (28) after controlling the first solenoid valve (27) to open in response to a first operation information of the user, when the second solenoid valve (28) is in the open state after a predetermined time during which the control module (10) receives power from the hydroelectric generator (7); and keep an open state of the first solenoid valve (27) after controlling the second solenoid valve (28) to open in response to a second operation information of the user, when the first solenoid valve (27) is in the open state.

5. A waterway switching device comprising a switching valve (2) and the control module (10) of any one of claims 1 to 4;
wherein the switching valve (2) comprises a valve body, a valve stem (25), and at least two solenoid valves, the valve body has a water inlet port (103), a first water outlet port (101), and at least two second water outlet ports (102), the valve stem (25) is configured for controlling opening and closing of the first water outlet port (101), and each solenoid valve is configured for respectively controlling opening and closing of one of the second water outlet ports (102); the valve body is provided with a water inlet cavity (104) communicated with the water inlet port (103), and the valve stem (25) is configured to be movably positioned in the water inlet cavity (104); when the second water outlet ports (102) are all in a closed state, the valve stem (25) is capable of moving to a position where the first water outlet port (101) is opened under an action of a water inlet pressure of the water inlet cavity (104), and when at least one of the second water outlet ports (102) is opened, the valve stem (25) is capable of moving to a position where the first water outlet port (101) is closed under the action of the water inlet pressure of the water inlet cavity (104).

6. The waterway switching device of claim 5, wherein the water inlet cavity (104) is communicated with a first channel communicated with the first water outlet port (101) and a second channel communicated with the at least two second water outlet ports (102); and
wherein the valve stem (25) has a first blocking portion (251) for blocking the first channel and a second blocking portion (252) for blocking the second channel, and a cross section of the first blocking portion (251) is smaller than a cross section of the second blocking portion (252); when the second water outlet ports (102) are closed, water in the water inlet cavity (104) pushes the first blocking portion (251) to move the valve stem (25) to a position where the first water outlet port (101) is opened; and when at least one second water outlet port (102) is opened, water in the water inlet cavity (104) pushes the second blocking portion (252) to move the valve stem (25) to a position where the first water outlet port (101) is closed, and water in the water inlet cavity (104) is capable of flowing from between the second blocking portion (252) and an inner wall of the second channel to the second water outlet port (102).

7. A water outlet device, comprising a water outlet body (1) and the waterway switching device of claim 5 or 6, wherein the water outlet body (1) is provided with at least three water dividing cavities, each of the water dividing cavities is correspondingly provided with a water spray port, wherein the first water outlet port (101) and at least two second water outlet ports (102) of the switching valve (2) respectively correspondingly communicate with one of the water dividing cavities to respectively supply water to the one of the water dividing cavities, thereby causing the water outlet device to perform water discharge in at least three water outlet modes.

8. The water outlet device of claim 7, further comprising a hydroelectric generator (7) mounted in the water outlet body (1), wherein the hydroelectric generator (7) is configured for supplying power to the control module (10) and the switching valve (2); the hydroelectric generator (7) comprises a housing, and an impeller (73), a stator (74) and a rotor which are mounted in the housing; the housing is provided with a first chamber and a second chamber, the stator (74) and the rotor are mounted in the second chamber, and the impeller (73) is mounted in the first chamber and connected to the rotor; and
wherein the housing comprises a housing body (71) and a water inlet cover (72) located at a water inlet end of the first chamber, a tapered protrusion (721) is provided on an outer side of the water inlet cover (72), a plurality of water inlet holes (722) inclined relative to a center line are provided around the tapered protrusion (721), the plurality of water inlet holes (722) are inclined towards a same direction in a circumferential direction, and water enters the first chamber from the water inlet holes (722) and pushes the impeller (73) to rotate.

9. The water outlet device of claim 8, wherein an inclination angle of the water inlet holes (722) relative to the center line is 50°-70°; or
wherein each blade (732) of the impeller (73) is curved and extended in a direction away from a center to form an arc-shaped structure, wherein a water-obstructing rib (7321) is disposed at an end position of a concave side of the blade (732).

10. The water outlet device of claim 8, wherein the impeller (73) comprises an intermediate connecting portion (731) and a plurality of blades (732) around the intermediate connecting portion (731), a circular connecting seat (733) is further provided around the intermediate connecting portion (731), the circular connecting seat (733) is connected at root positions of the plurality of blades (732) close to the intermediate connecting portion (731), and the circular connecting seat (733) tapers in diameter in a direction toward the water inlet cover (72); or
wherein a wire diameter of a coil of the stator (74) is 0.1 mm-0.12 mm and a number of turns of the coil is 900-1000.

11. The water outlet device of any one of claims 7-10, wherein the water outlet device is a shower or a top sprayer; and
wherein when the water outlet device is a shower, the hydroelectric generator (7) is disposed at a handle of the shower.

12. A shower, comprising a water outlet body (1), and a switching valve (2), a hydroelectric generator (7) and a control module (10) which are disposed on the water outlet body (1), wherein the hydroelectric generator (7) is electrically connected with the control module (10) and the switching valve (2), the water outlet body (1) is provided with at least two water dividing cavities, and each of the water dividing cavities is correspondingly provided with a water spray port; the switching valve (2) comprises a valve body with at least two water outlet ports and at least two solenoid valves, each solenoid valve is configured corresponding to one water outlet port to control opening and closing of the corresponding water outlet port; each of the water outlet ports correspondingly communicates with one water dividing cavity to supply water to the water dividing cavity; and the control module (10) is configured to:
control one solenoid valve to work and stop working of other solenoid valves except the solenoid valve, in response to a first operation information of a user, so as to turn on shower water corresponding to the solenoid valve; wherein the first operation information is configured to control opening of the solenoid valve; and
control another solenoid valve to work and control other solenoid valves except said another solenoid valve to stop working, in response to a second operation information of the user, so as to turn on shower water corresponding to said another solenoid valve; wherein the second operation information is configured to control opening of said another solenoid valve.

13. The shower of claim 12, wherein the switching valve (2) comprises two solenoid valves, and the control module (10) is further configured to:
control both of the two solenoid valves to open, in response to a fourth operation information of the user, after a predetermined time during which the control module (10) receives power from the hydroelectric generator (7); wherein the fourth operation information is configured to control opening of the two solenoid valves; and/or
keep an open state of one of the two solenoid valves or keep a closed state of the two solenoid valves, in response to a fourth operation information of the user, within a predetermined time during which the control module (10) receives power from the hydroelectric generator (7); wherein the fourth operation information is configured to control opening of the two solenoid valves.

14. The shower of claim 12, wherein the water outlet body (1) comprises a hand-held portion and a water outlet portion, the hydroelectric generator (7) is provided in the hand-held portion, and the switching valve (2) is provided in the water outlet portion;
wherein the hydroelectric generator (7) comprises a power generation module and a water inlet cover (72); the power generation module is connected to an impeller (73) to convert rotation of the impeller (73) into electric energy; the water inlet cover (72) is disposed upstream of the impeller (73), the water inlet cover (72) has a tapered protrusion (721) projecting upstream, and a plurality of water inlet holes (722) inclined with respect to a center line and disposed around the tapered protrusion (721); the plurality of water inlet holes (722) are inclined towards a same direction in a circumferential direction, and water enters from the water inlet holes (722) and pushes the impeller (73) to rotate; and
wherein an inclination angle of the water inlet holes (722) relative to the center line is 50°-70°.

15. The shower according to any one of claims 12 to 14, wherein the valve body is provided with a water inlet cavity (104) communicated with a water inlet channel of the water outlet body (1), and a movable valve stem (25) is provided in the water inlet cavity (104); the at least two water outlet ports of the valve body comprise a first water outlet port (101) and at least two second water outlet ports (102), each solenoid valve is provided corresponding to one of the second water outlet ports (102); when the second water outlet ports (102) are in a closed state, the valve stem (25) is capable of moving to a position where the first water outlet port (101) is opened under an action of a water inlet pressure of the water inlet cavity (104), and when at least one of the second water outlet ports (102) is opened, the valve stem (25) is capable of moving to a position where the first water outlet port (101) is closed under the action of the water inlet pressure of the water inlet cavity (104).
